## Europäisches Patentamt
## European Patent Office
## Office européen des brevets

(19)

(11) Veröffentlichungsnummer: **0 014 397**
**A1**

(12) # EUROPÄISCHE PATENTANMELDUNG

(21) Anmeldenummer: 80100399.7

(22) Anmeldetag: 25.01.80

(51) Int. Cl.³: **B 29 J 5/00**
C 08 L 97/02, C 04 B 17/06

(30) Priorität: 27.01.79 DE 2903177

(43) Veröffentlichungstag der Anmeldung:
20.08.80 Patentblatt 80/17

(84) Benannte Vertragsstaaten:
AT BE CH FR GB IT LU NL SE

(71) Anmelder: Simatupang, Maruli H., Dr.
Schützenstrasse 40
D-2057 Reinbek(DE)

(72) Erfinder: Simatupang, Maruli H., Dr.
Schützenstrasse 40
D-2057 Reinbek(DE)

(74) Vertreter: von Füner, Alexander, Dr. et al,
Patentanwälte Schiff, von Füner Strehl, Schübel-Hopf,
Ebbinghaus, Finck Mariahilfplatz 2 u. 3
D-8000 München 90(DE)

(54) Verfahren zur Herstellung von Werkstoffen.

(57) Die Erfindung bezieht sich auf die Verwendung von Zusatzmitteln, wie Borsäure und deren Salze, mit Natrium, Kalium, Magnesium, Lithium or Ammoniak, Natrium-, Kalium-, Magnesium-, Lithium-, Kupferoder Zinkazetat, Zinkchlorid, Zinksulfat, Kupfersulfat, Primäres- oder Sekundäres Ammoniumphosphat, bei der Herstellung von Werkstoffen, wie Holzspanplatten zur Verzögerung der Erhärtung und Abbindung von kaustisch gebranntem Magnesit, halbgebranntem Dolomit, oder aktiviertem Magnesiumoxid in die Fertigmischung aus Holzspänen oder anderen organischen und anorganischen Fasern, Wasser, und darin gelöstem Magnesiumchlorid- oder sulfat.

Fig. 1

Temperaturverlauf in der Platte bei 120°C Pressentemperatur

EP 0 014 397 A1

EPA-19903

# VERFAHREN ZUR HERSTELLUNG VON WERKSTOFFEN

Die Erfindung bezieht sich auf ein Verfahren zur Herstellung von Werkstoffen, z.B. Holzspanplatten, Faserplatten aus Holzfasern oder anderen organischen und anorganischen Fasern, unter Verwendung von kaustisch gebranntem Magnesit, halbgebranntem Dolomit und/oder aktiviertem Magnesiumoxid sowie Magnesiumsulfat- bzw. -chloridlösung durch Mischen der Bestandteile und anschließendem Verpreßen unter Wärme und Druck.

Es sind Verfahren bekannt, bei denen Holzpartikel, organisches oder anorganisches Fasermaterial mit kaustisch gebranntem Magnesit oder aktiviertem Magnesiumoxid unter Beimischung wässriger Lösungen von Magnesiumchlorid oder Magnesiumsulfat gründlich vermischt werden. Anschließend werden daraus Formlinge hergestellt und diese unter Einfluß von Wärme und Druck zu Fertigprodukten verpreßt.

So wird bei der Herstellung von magnesitgebundenen Holzwolle-Leichtbauplatten - bekannt unter dem Namen "Heraklith-Platten" - Holzwolle zunächst mit einer

sulfatlös... ... ... ... ... Magnesia
bestäubt. Unmittelbar dana.. kommt das fasermaterial
auf ein kontinuierlich ... ... ... unter
leichtem Druck ... ... ... ... Magnesia
zu einer harten Masse erhärtet. Wegen der kurzen
Zeitspanne zwischen ... ... der Komponenten miteinander und der endgültigen Verpressung und somit der
Erhärtung wird hier ... durch abbindendes kaustisches
Magnesit gefordert.

Bei der Herstellung der kunstharzgebundenen Spanplatten
folgt man einem anderen Verfahren. Hier werden Holzspäne zunächst getrocknet, anschließend mit einer Hydrophobierungsmittel enthaltenden Flüssigkeit und dem
Leim vermischt. Im allgemeinen kommen die so aufbereiteten Holzspäne in einen Bunker, wo sie zwischengelagert werden. Um unerwünschte Abbinderreaktionen
des Leims zu verhindern, werden solche organischen
Bindemittel so zusammengesetzt, daß hier keine nennenswerte Erhärtung eintritt. Die aufbereiteten Späne
werden mit Hilfe von Streuanlagen auf Formbleche dosiert,
vorgepreßt und kommen zur endgültigen Verpressung in eine
beheizte Presse. Magnesitgebundene Spanplatten können
auf ähnliche Weise hergestellt werden (DP 24 52 378.2
-45; M.H. Simatupang und H.G. Schwarz, Holz-Zentralblatt
Stuttgart Nr. 87,1975,S.1129).

Kaustisch gebranntes Magnesit, auch Magnesia genannt,
wird nach DIN 273 in der Bundesrepublik Deutschland genormt. Nach dieser Norm darf ein Gemisch, bestehend aus
Magnesia und magnesiumchloridhaltigem Wasser ($20^{\circ}$Be)
nicht eher als nach 40 Minuten erstarren, und die Erhärtung soll sich innerhalb von 8 Stunden vollziehen.
Es ist bekannt, daß die Hydratation oder Wasseraufnahme
der Magnesia eine exotherme Reaktion (Wärme wird frei)

darstellt. Bei der Vermischung von Holzspänen, Magnesia, eventuell anorganischen Zusätzen, Magnesiumchlorid- oder Magnesiumsulfatlösung, wie es bei der Herstellung von magnesitgebundenen Spanplatten vorgesehen ist, kommt es vor, daß unter Einfluß der entwickelten Wärme in dem Bunker bereits eine unerwünschte Abbindereaktion stattfindet. Bei der anschließenden Verpressung erhält man Fertigprodukte mit ungenügenden Festigkeitseigenschaften. Diese Erscheinung wird in verstärktem Maße bei hochaktiver Magnesia beobachtet. Jedoch sind wiederum solche Magnesiasorten erwünscht, um Fertigprodukte mit hohen Festigkeitseigenschaften zu erzeugen.

Aufgabe der Erfindung war es, die Ausgangsmischung aus Bindemittel, Grundstoff und Magnesiumchlorid- oder Magnesiumsulfatlösung lagerungsfähiger zu gestalten. Dies konnte nur dadurch geschehen, daß die Erhärtung oder Abbindung des kaustisch gebrannten Magnesit, halbgebrannten Dolomit oder aktiviertem Magnesiumoxyd verzögert wird. Diese Aufgabe wird, wie aus den anschließenden Patentansprüchen ersichtlich, durch Zugabe eines Zusatzmittels gelöst. Dabei kann die Zwischenlagerung vor dem Formen und Verpressen bis zu 30 Stunden betragen.

Die Erfindung betrifft nun die Zugabe von wirksamen Zusatzmitteln, die die Erhärtung der Magnesia verzögern, ohne jedoch die in der Hitze vorgenommene Abbindung, wie sie üblicherweise bei der Herstellung von Spanplatten praktiziert wird, zu beeinträchtigen. Unter Einfluß solcher Zusatzmittel werden auch die technologischen Eigenschaften wie die Dickenquellung nach Wasserlagerung erheblich verringert.

Als Zusatzmittel können eingesetzt werden: Borsäure, Natrium-, Kalium-, Magnesium-, Lithiumborat, insbesondere Borax, oder Ammoniak, Natrium-, Kalium-, Magnesium-, Lithium-, Kupfer- oder Zinkazetat, Zinkchlorid, Primäres- oder Sekundäres Ammoniumphosphat, Kupfersulfat und/oder Zinksulfat. Bevorzugt, auch von der Kostenseite her, ist Borax.

Die Zusatzmittel können einzeln oder auch im Gemisch verwendet werden.

Die Zusatzmittel werden in einer Menge von bis zu 5 Gew.% berechnet als wasserfreie Verbindung, bezogen auf die eingesetzte Menge an Bindemittel eingesetzt. Der bevorzugte Bereich beträgt 0,20 bis 4 % , insbesondere ist ein Bereich von 0,5 bis 2 % vorzuziehen.

Die Zugabe der Zusatzmittel kann in verschiedener Weise erfolgen, unter anderem aufgelöst in dem Anmachwasser, oder in der Magnesiumchlorid- oder Magnesiumsulfatlösung,
    durch Mischen mit dem ungemahlenen Magnesit oder ungemahlenen halbgebrannten Dolomit und anschließendem Mahlen und Sieben,
    durch Zugabe zu dem gemahlenen Magnesia oder halbgebrannten Dolomit in Pulverform und anschließendem gründlichen Vermischen,und
    schließlich und endlich in wässriger Lösung mit einer Konstellation von bis zu 10 Gew.-%(berechnet als wasserfreie Verbindung) der Holzspäne oder dem organischen oder anorganischen Fasermaterial und zwar bevor diese zur Herstellung von Magnesiagebundenen Werkstoffen herangezogen werden.

Bei dieser Gelegenheit sind die Ausführungsformen zu wählen, die ohne besondere apperative Ausgestaltung bei der Span- oder Faserplattenherstellung zweckmäßig sind, also insbesondere die Variante 1 oder auch die letzte.

Beispiel

Zur Bestimmung der verzögernden Wirkung der chemischen Verbindungen wurde ein Gemisch aus 50 g Magnesia, 40 ml Magnesiumsulfatlösung ( 15 %ig) und 6 g lufttrockenen Fichtenholzspänen (Korngröße ca. 0,3 mm) gründlich vermischt und unmittelbar in ein Thermosgefäß gestellt. Bei den Versuchen mit Chemikalienzusätzen wurde die Verbindung in der Magnesiumsulfatlösung gelöst.

Nach Verschließen des Thermosgefäßes mit einem durchbohrten Korkstopfen und Einführen eines Thermoelementes registriert ein angeschlossener Potentiometerschreiber den Temperaturverlauf. Der Temperaturverlauf stellt ein Maß für die auftretende exotherme Reaktion dar. Ihre Beurteilung kann aufgrund des erreichten Temperaturmaximums oder anhand der Zeit, die benötigt wird, um solch ein Maximum zu erreichen, erfolgen. Nach der zuletzt genannten Methode wird die Verzögerung rechnerisch als Inhibitionsindex (I) dargestellt.

$$I = \frac{T_X - T_O}{T_O} \times 100 \text{ \%}$$

$T_X$ = Zeit zum Erreichen des Temperaturmaximums in Stunden bei Proben mit Zusatzmittel

$T_O$ = Zeit zum Erreichen des Temperaturmaximums in Stunden bei Versuchen ohne Zusatzmittel

Tabelle 1 stellt die Ergebnisse solcher Versuche dar.

Die Überprüfung dieser Zusätze auf die Biegefestigkeiten von versuchsweise hergestellten magnesitgebundenen Spanplatten und der Temperaturverlauf in den Platten während des Pressens ist in Tabelle 2 und Bild 1 dargestellt.

Die Versuchsplatten enthalten je 800 g atro Fichten-späne, wie sie üblicherweise für die Herstellung von Spanplatten verwendet werden, 1200 g Magnesia und insgesamt 960 ml Wasser, worin 90 g wasserfreies Magnesiumsulfat gelöst war. Bei Zusatzmittel enthaltenden Versuchsplatten wird dieses Zusatzmittel in der Magnesiumsulfatlösung aufgelöst.

Zur Herstellung der Versuchsplatten wurden die Späne mit der Magnesiumsulfat-Lösung versetzt und in einem Zwangsmischer etwa 3 Minuten lang durchmischt. Anschließend erfolgte die Zugabe der Magnesiamenge. Das Gemisch wurde so lange durchgemischt, bis eine gleichmäßige Verteilung des Bindemittels auf den Spänen erreicht war. Die Schüttung der Späne erfolgte manuell, wobei das Format der Versuchsplatten durch einen Holzrahmen mit den Maßen 50 x 40 cm vorgegeben war. Vor dem Beschicken der Heizpresse wurde der Spankuchen bei ca. 0,04 N/mm$^2$ kalt vorgepreßt. Die eigentliche Pressung erfolgte zwischen hochglanzpolierten Hartmetallblechen, die vorher schwach mit Paraffinöl bestrichen waren, bei einem Druck von 1,7 N/mm$^2$, einer Temperatur von 120$^o$C und einer Dauer von 15 Minuten.

Das Auftreten einer exothermen Reaktion während des Pressens wurde durch die Aufzeichnung des Temperaturverlaufs in der Platte mit Hilfe eines in den Spankuchen eingeschobenen Thermoelementes bestimmt. Den Temperaturverlauf registrierte ein Potentiometerschreiber (Bild 1). Unter Zusatz von 2 Gew.-% Borax, bezogen auf die eingesetzte Magnesia, verzögerte sich das Auftreten des Temperaturmaximums. Dieses Spänegemisch wurde 27 Stunden nach dessen Herstellung verpreßt. Aus einem Spänegemisch ohne Boraxzusatz konnte nach 27 Stunden keine brauchbare Versuchsplatte hergestellt werden. Nach DIN-273 soll genormte Magnesia nicht vor Ablauf von 40 Minuten erstarren und die Abbindung innerhalb von 8 Stunden erfolgen.

0014397

Bild 1 zeigt eindeutig, daß während des Pressens eine exotherme Reaktion auftritt, wobei die in der Platte herrschende Temperatur zeitweilig um 28°C höher ist als die Temperatur der Presse. Unter dem Einfluß des zugesetzten Borax verzögert sich dieses Temperaturmaximum un 3 Minuten.

Die erreichte Temperatur während der exothermen Reaktion stellt ein Maß für die freiwerdende Wärme dar. Sie wird durch die Beschaffenheit des gebrannten Magnesits bestimmt und beeinflußt auch maßgebend die Festigkeitseigenschaften des Fertigprodukts (Tabelle 2). Eine andere Magnesiasorte ergab eine so hohe Wärmeabgabe, daß die Temperatur in der Platte bis zu 200°C anstieg. In diesem Fall soll mit dem Öffnen der Presse gewartet werden, bis die Temperatur auf mindestens 150°C abgesunken ist. Wird die Presse bei höheren Temperaturen geöffnet, erfolgt eine zu schnelle Druckentspannung in der Platte, die in den meisten Fällen zu Mittenplatzern führt.

Eine höhere Temperatur bei der exothermen Reaktion und somit auch eine indirekte Temperaturerhöhung während des Pressens ergibt aber Platten mit höheren Biegefestigkeitseigenschaften (Tabelle 2).

Überraschenderweise wird unter Einfluß der Zusatzmittel Zinksulfat oder Kupfersulfat die Dickenquellung der magnesitgebundenen Spanplatten nach Wasserlagerung nach DIN 52 634 verringert (Tabelle 3).

Tabelle 1 und 2 zeigen, daß unter Einfluß der Zusatzmittel die Erhärtung verzögert wird. Aus Spänegemischen mit solchen Zusätzen können Spanplatten mit annähernd gleichen Eigenschaften gewonnen werden, wenn die Zusatzmenge, bezogen auf Magnesia, 5 Gewichtsprozent nicht übersteigt.

TABELLE 1

Verzögerung der Abbinderreaktion von Magnesia unter Einfluß verschiedener Chemikalien

| Spalte 1 | 2 | 3 | 4 | 5 | 6 |
|---|---|---|---|---|---|
| Chemische Verbindung | Zusatzmenge %, bezogen auf Magnesia | Zeit bis zum Temperatur-Maximum in Std. | Relativ % | Inhibi-tions-Index % | Bemerkungen |
| Zinkacetat | Ohne Zusatz | 12,5 | 100 | 0 | |
| | 1,0 | 14,8 | 118 | 15,5 | Probe |
| | 2,0 | 16,2 | 130 | 29,6 | nicht erhärtet |
| | 5,0 | 16,5 | 132 | | |
| Zink-chlorid | Ohne Zusatz | 17,8 | 100 | 0 | |
| | 1,0 | 18,7 | 105 | 5,1 | |
| | 2,0 | 19,4 | 109 | 9,0 | |
| | 5,0 | undeutliches Maximum | | | Probe erhärtet |
| Zink-sulfat | Ohne Zusatz | 16,7 | 100 | 0 | |
| | 1,0 | 18,0 | 108 | 7,8 | |
| | 2,0 | 19,1 | 114 | 14,4 | |
| | 5,0 | 19,5 | 117 | 19,2 | |
| Kupfer-acetat | Ohne Zusatz | 12,7 | 100 | 0 | |
| | 0,2 | 14,8 | 117 | 16,6 | |
| | 1,0 | 17,7 | 139 | 39,5 | |
| | 2,0 | 25,2 | 198 | 98,7 | |
| | 5,0 | Probe weich, erst nach 3 Tagen erhärtet | | | |
| Kuper-sulfat | Ohne Zusatz | 11,6 | 100 | 0 | |
| | 1,0 | 16,5 | 142 | 42,0 | |
| | 2,0 | 17,2 | 148 | 48,3 | |
| | 5,0 | 24,7 | 213 | 112,0 | Nicht erhärtet |
| Borax | Ohne Zusatz | 11,6 | 100 | 0 | |
| | 1,0 | 15,6 | 134 | 34,5 | |
| | 2,0 | 22,3 | 192 | 92,2 | Erhärtet später |
| | 5,0 | 46,7 | 403 | 302,6 | Erhärtet später |

0014397

Tabelle 1 (Fortsetzung)

| 1 | 2 | 3 | 4 | 5 | 6 |
|---|---|---|---|---|---|
| Primäres | Ohne Zusatz | 16,5 | 100 | O | Ammoniak- |
| Ammonium- | 0,1 | 20,5 | 124 | 24,2 | entwicklung |
| phosphat | 0,2 | 24,1 | 146 | 46,0 | |
| | 0,6 | 32,8 | 199 | 92,9 | |
| | 2;0 | 35,1 | 213 | 106,5 | |
| | | | | | |
| Sekundäres | Ohne Zusatz | 17,5 | 100 | O | Proben versteifen |
| Ammonium- | 0,2 | 18,5 | 106 | 5,4 | rasch, mehr als 40 ml |
| phosphat | 0,6 | 35,4 | 202 | 102,3 | Magnesiumsulfat sind |
| | 2,0 | 35,4 | 202 | 102,3 | erforderlich. |

<u>TABELLE 2</u>    Biegefestigkeit magnesiagebundener Spanplatten

| | Zusatzmittel Gewichts-% bezogen auf Magnesia | Temperatur in der Platte $^{o}C$ | Zeit bis zum Max. Minuten | Biege-festigkeit $N/mm^2$ | Rohdichte $g/cm^3$ |
|---|---|---|---|---|---|
| <u>Magnesia I</u> | | | | | |
| | Ohne Zusatzmittel | 145 | 7 | 16,1 | 1,15 |
| | 2 % Borax | 148 | 10 | 16,6 | 1,16 |
| | 0,38 % Primäres Ammoniumphosphat | n.b. | n.b. | 17,2 | 1,20 |
| | 0,75 % desgl. | n.b. | n.b. | 15,4 | 1,25 |
| | 1,5 % desgl. | n.b. | n.b. | 15,5 | 1,25 |
| | 3,0 % desgl. | n.b. | n.b. | 12,1 | 1,25 |
| | 5,2 % desgl. | n.b. | n.b. | 11,0 | 1,25 |
| <u>Magnesia II</u> | | | | | |
| | Ohne Zusatzmittel | 200 | 4 | 24,1 | 1,20 |
| | 1,0 Zinksulfat | n.b. | n.b. | 24,0 | 1,20 |
| | 0,20 Kupfersulfat | n.b. | n.b. | 25,0 | 1,20 |
| | 0,60 desgl. | n.b. | n.b. | 22,0 | 1,20 |

n.b. = nicht bestimmt

0014397

TABELLE 3

Dickenquellung magnesitgebundener Spanplatten

| Zusatzmittel | Dickenquellung nach Wasserlagerung | | | | | |
|---|---|---|---|---|---|---|
| Gewichts-% | 2 Stunden | | 24 Stunden | | 72 Stunden | |
| bez.auf Magnesia | % | Relativ % | % | Relativ % | % | Relativ % |
| Ohne Zusatzmittel | 3,6 | 100 | 5,2 | 100 | 5,7 | 100 |
| 0,5 Zinksulfat | 2,6 | 72 | 4,3 | 83 | 4,4 | 77 |
| 0,2 Kupfersulfat | 2,1 | 58 | 3,8 | 73 | 3,9 | 68 |

Bestimmt nach DIN 52 634

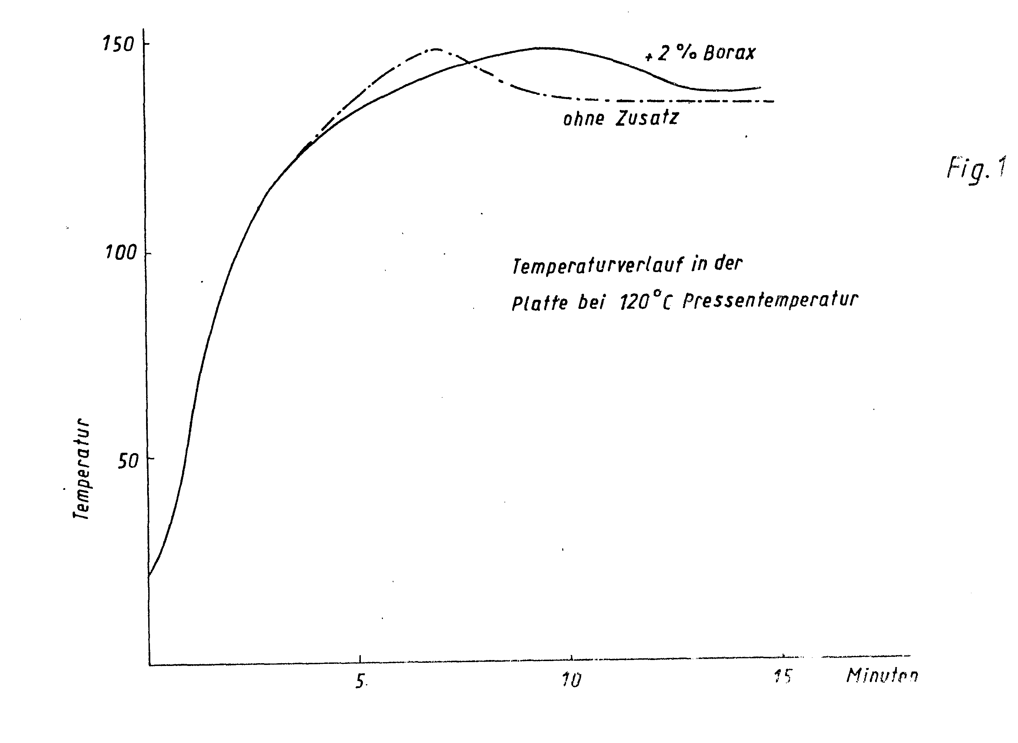

Patentansprüche


1. Verfahren zur Herstellung von Werkstoffen, z.B. Holzspanplatten, Faserplatten aus Holzfasern oder anderen organischen und anorganischen Fasern, unter Verwendung von kaustisch gebranntem Magnesit, halbgebranntem Dolomit und/oder aktiviertem Magnesiumoxid sowie Magnesiumsulfat bzw. -chloridlösung durch Mischen der Bestandteile und anschließendem Verpreßen unter Wärme und Druck, d a d u r c h  g e k e n n - z e i c h n e t , daß man der Mischung der Ausgangsstoffe Borsäure, Borsäuresalze, Essigsäuresalze, Zinkchlorid, Ammoniak, Primäres-, Sekundäres Ammoniumphosphat, Kupfersulfat und/oder Zinksulfat zusetzt.


2. Verfahren nach Anspruch 1, d a d u r c h  g e - k e n n z e i c h n e t , daß man als Borsäuresalze Natrium-, Kalium-, Magnesium-, oder Lithiumsalze verwendet.


3. Verfahren nach Anspruch 1, d a d u r c h  g e - k e n n z e i c h n e t ,  daß man als Essigsäuresalze Natrium-, Kalium-, Magnesium-, Lithium-, Kupfer- oder Zinksalze verwendet.


4. Verfahren nach Anspruch 1, oder Ansprüche 1 bis 3, d a d u r c h  g e k e n n z e i c h n e t , daß man die Zusätze in einer Menge von 0,20 bis 5 Gew.-%, berechnet als wasserfreie Verbindung, bezogen auf die eingesetzte Menge an Magnesia, halbgebranntem Dolomit oder aktiviertem Magnesiumoxyd einsetzt.

5. Verfahren nach Anspruch 4, d a d u r c h  g e-- k e n n z e i c h n e t, daß man die Zusatzmittel in einer Menge von 0,5 bis 2,0 einsetzt.

6. Verfahren nach einem der Ansprüche 1 bis 5, d a d u r c h  g e k e n n z e i c h n e t, daß man die Zusatzmittel im Anmachwasser oder in der Magnesiumchlorid- oder Magnesiumsulfatlösung auflöst und den übrigen Bestandteilen zugibt.

7. Verfahren nach Anspruch 1 bis 5, d a d u r c h  g e k e n n z e i c h n e t, daß man die Zusatzmittel in einer wässrigen Konzentration von bis zu 10 Gew.-%, berechnet als wasserfreie Verbindung, den Holzspänen oder dem organischen oder anorganischen Fasermaterial zugibt, bevor diese mit den Bindemitteln versetzt werden.

+2 % Borax

ohne Zusatz

Temperaturverlauf in der
Platte bei 120°C Pressentemperatur

Fig. 1

Nr. der Anmeldung: 80100399.7
Unsere Akte: EPA-19903

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | FR - A - 1 339 026 (FRITZ HOMANN)<br>* Ansprüche *<br><br>-- | 1 |
| | DE - A - 211 849 (SAGAX WOOD)<br>* Anspruch *<br><br>-- | 1 |
| P | CHEMICAL ABSTRACTS, Band 90, Nr. 22, 28. Mai 1979, Zusammenfassung Nr. 173532m, Seite 318<br>Columbus, Ohio, US,<br>V.K. BOCHAROV et al.: "Setting time of plugging mortars based on water-resistant magnesium sulfate-cement"<br>& Sb.Tr.Mosk.Inzh.Stroit.Inst.im. V.V.Kuibysheva, 1975, 17, 64-7<br>* Zusammenfassung *<br><br>-- | 1 |
| A | DE - A - 2 460 392 (WILKE KLAUS DIETHER)<br>* Ansprüche *<br><br>-- | |
| A | DE - A - 2 451 667 (SIMATUPANG)<br>* Ansprüche *<br><br>---- | |

**KLASSIFIKATION DER ANMELDUNG (Int.Cl. 3)**

B 29 J 5/00
C 08 L 97/02
C 04 B 17/06

**RECHERCHIERTE SACHGEBIETE (Int. Cl. 3)**

C 08 L 97/02
C 04 B 17/06
17/03

**KATEGORIE DER GENANNTEN DOKUMENTE**

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 07-05-1980 | LENSEN |